# EUROPEAN PATENT SPECIFICATION

(11) **EP 0 894 771 B1**
(45) Date of publication and mention of the grant of the patent: **02.04.2003**
(21) Application number: 98114074.2
(22) Date of filing: 28.07.1998
(51) Int. Cl.: C03B 5/02, C03B 5/08, H05B 6/02, F27D 11/06

(54) **Improvements to induction furnaces for the synthesis of glasses**
Verbesserungen an Induktionsöfen für die Synthese von Glas
Amélioriations à des fours à inductions pour la synthèse de verres

(30) Priority: 29.07.1997 IT TO970677
(43) Date of publication of application: 03.02.1999
(73) Proprietor: Agilent Technologies, Inc. (a Delaware corporation), Palo Alto, CA 94303 (US)
(72) Inventor: Braglia, Marco, 10134 Torino (IT); Dai, Guojun, 10141 Torino (IT); Mosso, Sabrina, 10070 Cafasse (Torino) (IT)
(74) Representative: Riederer Freiherr von Paar zu Schönau, Anton

(56) References cited:
- EP-A- 0 517 169
- FR-A- 2 589 562
- GB-A- 1 404 313
- US-A- 4 885 019
- US-A- 5 022 044

## Description

The present invention relates to the production of glasses, and more specifically it concerns improvements to induction furnaces for the synthesis of glasses. Preferably, but not exclusively, the glasses in question are glasses for optical fibres for telecommunications, in particular fluorozirconate glasses.

To synthesise non-oxide glasses for optical fibres for telecommunications, two types of furnaces are usually used: resistor furnaces and induction furnaces.

Induction furnaces present the advantage of guaranteeing a high heating speed and of favouring the good mixing of the components of the glass, thanks to the agitation induced on the ions present in the molten glass by the magnetic field used for heating. However, the structure of the furnaces is such as to give rise to relatively high temperature inhomogeneity in the mixture (differences in the order of 20 - 30° C between the coolest and the hottest point) and this does not allow obtaining a high quality of the glass and, consequently, of the resulting fibre. Moreover, since a lower temperature zone is found just in correspondence with the mouth of the crucible containing the mixture of the glass constituents, in case of mixtures whose constituents easily tend to sublimate (such as, in particular, mixtures for fluorozirconate glasses), sublimated materials are likely to become deposited around this mouth and those materials, when the molten mixture is cast, can introduce impurities in the glass.

It is known in the field of inductively melting glass to place a crucible inside another enveloping crucible to provide an almost uniform thermal environment around the melt-containing crucible. Thereby, the inner crucible contacts the entire inner surface of the enveloping crucible (GB-A-1 404 313) or only the bottom of the enveloping crucible (US-A-4 885 019).

Resistor furnaces, on the contrary, homogeneously heat the mixture, but the required temperature is reached more slowly and they do not favour good component mixing. Moreover, it is relatively complex to obtain heating in controlled atmosphere.

The object of the invention is to provide an improved induction furnace wherein the temperature inhomogeneity between different areas of the furnace is eliminated.

The furnace comprises a reactor of some longitudinal height inside which a support device for a crucible containing a mixture of constituents of a glass to be synthesised is arranged, such device presenting in its top part an e. g. disk-shaped or planar base element. According to the invention said base element is associated with a first lower sleeve extending upwardly from the base element, on top of which lower sleeve an annular element able to engage the outer wall of the crucible preferably by inwards projecting radial appendages is inserted, on top of which annular element a second, upper sleeve extends upwardly, the sleeves being arranged one above the other to have longitudinal heights and having an inner diameter larger than the outer diameter of the crucible; particularly, the first sleeve has such a longitudinal height that the crucible is supported in the annular element in such a way as to be spaced from the base element, and the second sleeve has such a longitudinal height that its top edge is at a level higher than that of the top edge of the crucible, to obtain a homogeneous temperature region extending at least along the entire height of the crucible; wherein preferably the annular element is fitted onto the first sleeve and the second sleeve is fitted onto the annular element.

For the sake of clarification, reference is made to the accompanying drawings, wherein:
- Figure 1 is a schematic cross-sectional view of a conventional induction furnace;
- Figure 2 is a schematic cross-sectional view of an induction furnace comprising the improvements according to the invention, and
- Figures 3, 4 are views of some details.

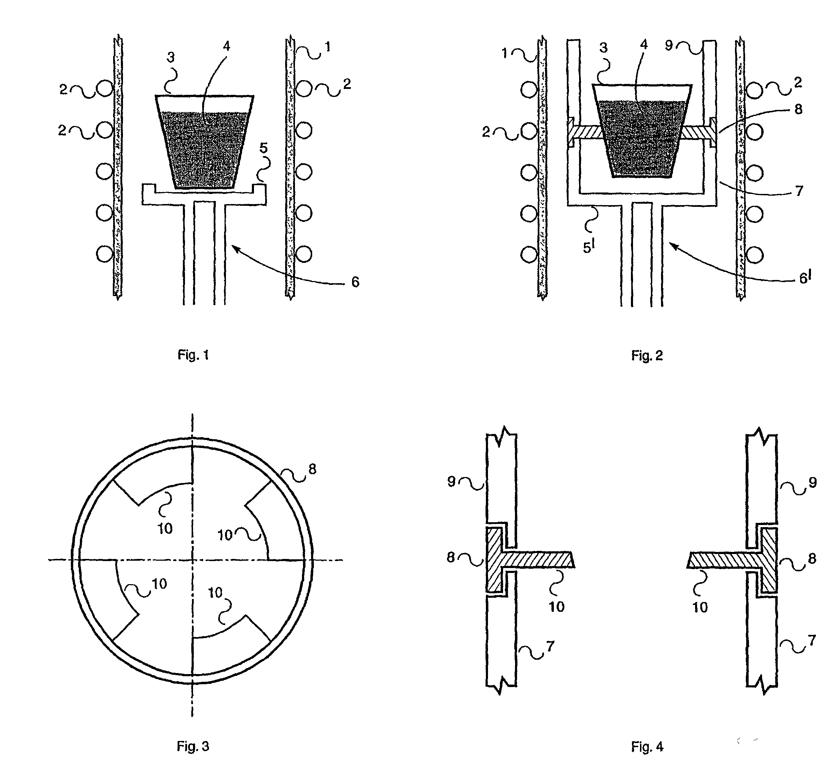

As shown in Figure 1, a conventional induction furnace can be represented schematically by a reactor 1, e. g. of SiO₂, whereon a coil 2 is wound. Crucible 3 destined to contain mixture 4 of constituents of the glass to be synthesised is placed inside reactor 1. Crucible 3 is made of a metal having good thermal and electrical conductivity and a melting point such as to allow its use for the preparation of the glasses of interest. For instance, for the preparation of fluorozirconate glasses, crucible 3 is generally made of a Pt/Au alloy (e. g. 95 % Pt, 5 % Au, percentages in weight). Such crucible, during heating operations, directly rests on the upper plate or disk 5 of a crucible holder or support 6 made of Ni or the like. By this arrangement the glass mixture, in its part near the bottom of crucible 3, is at a lower temperature than that of the upper part of the crucible itself, as a result of the subtraction of heat by the support, with the consequences explained above.

For the sake of drawing simplicity, neither the electrical power supply devices of coil 2, nor the temperature control means generally associated with crucible holder 6 have been shown.

Figures 2 - 4 show the construction of the crucible holder in a furnace according to the invention. As shown, the crucible holder, indicated in this embodiment as 6', is modified, with respect to conventional crucible holder 6, in that plate 5' which in the depicted embodiment is a planar element is associated with two sleeves 7, 9, between which an annular element 8 destined to support the crucible 3 is mounted. Also sleeves 7, 9 and annular element 8 are made of metals having good thermal and electrical conductivity and such melting point as to allow their employment of the preparation of the glasses of interest. In the preferred application of the invention, which concerns a furnace for the production of fluorozirconate glasses for optical fibres for telecommunications, the sleeves can be made for instance of Ni, Pt, Au or alloys thereof.

Sleeve 7 essentially is to serve as a spacer, to maintain the annular element 8 at such a distance from plate 5' that the bottom of crucible 3 does not come in contact with plate 5'. The sleeve can be an integral part of plate 5', so that the top part of crucible holder 6' is essentially cup-shaped, or it can be a distinct element, joined to plate 5' in any convenient way.

Annular element 8, mounted for instance by fitting onto sleeve 7, presents a series of internally projecting radial appendages 10 (e. g. four equidistant appendages), and having an oblique terminal surface matching the inclination of the walls of the crucible. The discontinuous construction of the contact surface between the annular element 8 and the crucible 3 presents a twofold advantage: 1) it reduces the absorption of the electromagnetic field power by the annular element itself, and 2) if the material of the disk is not the same as that of crucible 3, it reduces the chance that thermal gradients may arise.

The second sleeve 9, mounted in turn e. g. by fitting onto disk 8, essentially is to extend upwards the region of uniform temperature, in such a way that such region extends at least along the entire height of crucible 3; for this purpose sleeve 9 shall have such longitudinal dimensions that its top edge is at a level higher than that of the top edge of the crucible.

In more detail, both sleeves 7, 9 have the shape of right circular cylinders with equal diameters and equal wall thicknesses. The radial appendages 10 of the annular element 8 have the shapes of ring sectors, the internal edges thereof being arranged on a common circle the diameter of which is between the maximum outside diameter and the minimum outside diameter of the frustroconical crucible. The lengths of the sleeves 7 and 9 exceed the partial heights of the crucible being inserted into the annular element 8, i. e. the height from the diameter equal to the inner edge diameter of element 8 to the top and the height from such inner edge diameter of element 8 to the bottom of the frustroconical crucible. - The wall thickness of the sleeves 7 and 9 exceeds the one of the ring portion of the annular element 8, i. e. without the appendages 10, but at the place of contact to the element 8, the sleeves each have a shoulder realized by a ring portion of reduced outside diameter at the top of sleeve 7 and at the bottom of sleeve 9, the cutout ring-shaped recess which has a section adapted to the ring section, i. e. in the depicted example a rectangular section, housing, in the assembled structure, the ring portion of the annular element 8, while the top and bottom front ends of these reduced-diameter portions of the sleeves are spaced from each other by the radial appendages 10 of element 8.

Measures performed by the applicant in the course of the synthesis of fluorozirconate glasses have shown that, by using the crucible holder according to the invention, a temperature difference in the order of 2° C is obtained between the hottest and the coolest point inside the mixture (brought to 850 - 900° C), thus a difference smaller by at least one order of magnitude than that obtainable with conventional induction furnaces. Therefore, with the described arrangement, the drawbacks indicated above are eliminated, and hence a furnace equipped with the crucible holder device according to the invention combines the advantages of induction furnaces with those of resistor furnaces.

It is evident that the description above is given solely by way of non-limiting example and that variations and modifications can be made thereto without thereby departing from the scope of the invention.

## Claims

1. Induction fumace for the synthesis of glasses, comprising a reactor (1) of some longitudinal height inside which a support device (6') for a crucible (3) containing a mixture (4) of constituents of a glass to be synthesised is arranged, such device (6') presenting in its upper part a base element (5'), **characterised in that** said base element (5') is associated with a first, lower sleeve (7) extending upwardly from the base element, on top of which lower sleeve an annular element (8) able to engage the outer wall of the crucible (3) is inserted, on top of which annular element a second, upper sleeve (9) extends upwardly, the sleeves being arranged one above the other to have longitudinal heights and having an inner diameter larger than the outer diameter of the crucible (3); and **in that** the first sleeve (7) has such a longitudinal height that the crucible (3) is supported in the annular element (8) in such a way as to be spaced from the base element (5'), and the second sleeve has such a longitudinal height that its top edge is at a level higher than that of the top edge of the crucible (3), to obtain a homogeneous temperature region extending at least along the entire height of the crucible (3).

2. Furnace as claimed in claim 1, **characterised in that** said annular element (8) presents a set of inwards projecting radial appendages (10), arranged to engage the outer surface of the crucible.

3. Furnace as claimed in claim 1 or 2, **characterised in that** said annular element (8) is fitted onto the first sleeve (7).

4. Furnace as claimed in any of claims 1 to 3, **characterised in that** said second sleeve (9) is fitted onto the annular element (8).

5. Furnace as claimed in any of claims 1 to 4, **characterised in that** said first sleeve (7) is an integral part of the base element (5').

## Patentansprüche

1. Induktionsofen für die Synthese von Gläsern, umfassend einen Reaktor (1) einer gewissen longitudinalen Höhe, innerhalb dessen ein Halter (6') für einen Schmelztiegel (3), der ein Gemisch (4) von Ausgangsstoffen für ein zu synthetisierendes Glas enthält, angeordnet ist, wobei der Halter (6') in seinem oberen Teil ein Basiselement (5') aufweist, **dadurch gekennzeichnet, daß** dem Basiselement (5') eine erste, untere Hülse (7) zugeordnet ist, die sich vom Basiselement nach oben erstreckt und auf deren Oberseite ein Ringelement (8) eingesetzt ist, das an der Außenwand des Schmelztiegels (3) angreifen kann und auf dessen Oberseite sich eine zweite, obere Hülse (9) nach oben erstreckt, wobei die Hülsen übereinander mit longitudinalen Höhen angeordnet sind und einen Innendurchmesser haben, der den Außendurchmesser des Schmelztiegels übertrifft; und daß die erste Hülse (7) eine solche longitudinale Höhe hat, daß der Schmelztiegel (3) im Ringelement (8) so gehalten ist, daß er einen Abstand vom Basiselement (5') aufweist, und daß die zweite Hülse (9) eine solche longitudinale Höhe hat, daß ihr oberer Rand sich in einer Höhenlage befindet, die höher als der obere Rand des Schmelztiegels (3) liegt, zur Erzielung eines homogenen Temperaturbereichs, der sich wenigstens über die gesamte Höhe des Schmelztiegels (3) erstreckt.

2. Ofen nach Anspruch 1, **dadurch gekennzeichnet, daß** das Ringelement (8) eine Gruppe von einwärts vorspringenden radialen Ansatzstücken (10) umfaßt, die so angeordnet sind, daß sie an der Außenfläche des Schmelztiegels angreifen.

3. Ofen nach Anspruch 1 oder 2, **dadurch gekennzeichnet, daß** das Ringelement (8) auf die erste Hülse (7) aufgepaßt ist.

4. Ofen nach einem der Ansprüche 1 bis 3, **dadurch gekennzeichnet, daß** die zweite Hülse (9) auf das Ringelement (8) aufgepaßt ist.

5. Ofen nach einem der Ansprüche 1 bis 4, **dadurch gekennzeichnet, daß** die erste Hülse (7) ein integraler Teil des Basiselements (5') ist.

## Revendications

1. Four à induction pour la synthèse de verres, comprenant un réacteur (1) ayant une certaine hauteur longitudinale, à l'intérieur duquel est agencé un dispositif support (6'), pour un creuset (3) contenant un mélange (4) de constituants de verre à synthétiser, ledit dispositif (6') présentant dans sa partie supérieure un élément de base (5'), **caractérisé en ce que** ledit élément de base (5') est associé à une première chemise (7) inférieure, s'étendant vers le haut depuis l'élément de base, chemise inférieure en partie haute de laquelle un élément annulaire (8), en mesure de venir en prise avec la paroi extérieure du creuset (3), est inséré, élément annulaire en partie supérieure duquel une deuxième chemise supérieure (9) s'étend vers le haut, les chemises étant agencées l'une au-dessus de l'autre, pour avoir leur hauteur longitudinale et ayant un diamètre intérieur supérieur au diamètre extérieur du creuset (3) ; et **en ce que** la première chemise (7) a une hauteur longitudinale telle que le creuset (3) est supporté dans l'élément annulaire (8) de manière à être espacé de l'élément de base (5'), et la deuxième chemise a une hauteur longitudinale, tel que son bord supérieur est à un niveau supérieur à celui du bord supérieur du creuset (3), pour obtenir une région de température homogène, s'étendant au moins sur la totalité de la hauteur du creuset (3).

2. Four selon la revendication 1, **caractérisé en ce que** ledit élément annulaire (8) présente un jeu d'appendices (10) radiaux se projetant vers l'intérieur, agencés pour venir en contact avec la surface extérieure du creuset.

3. Four selon la revendication 1 ou 2, **caractérisé en ce que** ledit élément annulaire (8) est monté dans la première chemise (7).

4. Four selon l'une quelconque des revendications 1 à 3, **caractérisé en ce que** ladite deuxième chemise (9) est ajustée sur l'élément annulaire (8).

5. Four selon l'une quelconque des revendications 1 à 4, **caractérisé en ce que** ladite première chemise (7) fait partie intégrante de l'élément de base (5').
